# FASCICULE DE BREVET EUROPEEN

(11) **EP 1 406 529 B1**
(45) Date de publication et mention de la délivrance du brevet: **16.03.2005**
(21) Numéro de dépôt: 02770027.7
(22) Date de dépôt: 15.07.2002
(51) Int. Cl.: A47J 43/20

(54) **MOULE SOUPLE RIGIDIFIE**
VERSTEIFTE FLEXIBLE FORMPLATTE
RIGIDIFIED FLEXIBLE MOULDING PLATE

(30) Priorité: 17.07.2001 FR 0109544
(43) Date de publication de la demande: 14.04.2004
(73) Titulaire: SEB SA, 69130 Ecully (FR)
(72) Inventeur: BRASSET, Jean-François, F-74000 Annecy (FR)
(74) Mandataire: Pichat, Thierry
(86) Numéro de dépôt international: PCT/FR2002/002511
(87) Numéro de publication internationale: WO 2003/007769

(56) Documents cités:
- EP-A- 0 992 195
- CH-A- 443 870
- FR-A- 1 590 193
- FR-A- 2 658 034
- FR-A- 2 747 886
- FR-A- 2 767 048
- US-A- 3 233 813
- US-A- 3 545 645
- US-A- 3 580 484

## Description

La présente invention concerne un moule utilisé pour réaliser des préparations culinaires du type gâteaux, pâtisserie...

On connaît des moules en matière métalliques qui présentent une très grande rigidité, ce qui ne facilite pas le démoulage de la préparation.

On connaît aussi des moules en silicone qui ont l'avantage de passer au four, au four à micro-ondes, au réfrigérateur, au congélateur et au lave vaisselle sans subir d'altération, mais, qui du fait de la grande élasticité de la matière, manquent de rigidité. Cependant on peut citer trois inconvénients ayant leur origine dans sa grande élasticité : le démoulage de la préparation est difficile, la manipulation du moule est peu aisée du fait de la facile déformation du moule et la préparation non cuite (souvent liquide) peut facilement déborder pendant la manipulation du moule.

Des solutions ont été proposées pour obtenir un moule suffisamment souple par la réalisation de surépaisseur localisées de matière. Cependant les performances obtenues pour le démoulage et pour le maintien de la préparation liquide ne sont pas toujours satisfaisantes.

Le brevet FR 1 590 193 décrit un moule en élastomère silicone pour la fabrication de confiserie, constitué par un élément souple dans lequel plusieurs alvéoles sont réalisées et par une armature métallique rigide noyée dans la masse de l'élément souple s'étendant sur toute la hauteur de l'élément. Le démoulage des confiseries se fait par la réalisation d'une poussée sur le fond de l'élément souple afin de le retourner à la manière d'un gant, toute la hauteur du moule étant rigidifiée. Cette opération de démoulage est délicate, demande des efforts assez importants et risque d'endommager les confiseries que l'on veut démouler.

Le problème posé est de réaliser un nouveau moule pour préparation culinaire assurant le maintien de la préparation liquide et permettant un démoulage très aisé de la préparation solide.

La solution proposée est un moule pour préparation culinaire comportant une base en un matériau souple possédant une paroi latérale dont l'extrémité supérieure définit une ouverture, et une armature rigide annulaire. Selon l'invention, le moule comporte une couronne supérieure s'étendant radialement vers l'extérieur de la paroi latérale au niveau de l'ouverture de la base, l'armature annulaire étant fixée à cette couronne supérieure, sur toute la périphérie et à une distance prédéterminée de l'ouverture.

Par cette disposition particulière de l'armature, on comprend facilement que les avantages de la souplesse des moules en matière du type silicone sont conservés.

De plus, comme l'armature rigide est localisée uniquement au niveau de l'ouverture de la base et radialement décalée de celle-ci, le démoulage de la préparation culinaire se trouve grandement facilitée : il suffit d'une simple pression exercée vers le bas sur l'armature annulaire, le fond du moule étant posé sur un support. Entraînée par la couronne supérieure, la paroi latérale du moule se courbe et se retourne sur elle-même, permettant un démoulage simple, sans effort et ne pouvant pas abîmer la préparation culinaire.

Il n'est plus nécessaire d'exercer une poussée sur le fond de moule ni de le retourner comme un gant, ce qui est compliqué et délicat.

Contrairement à ce que l'homme du métier pouvait craindre, le fait de rigidifier uniquement au niveau de l'ouverture de la base et à une certaine distance radiale de celle-ci confère une rigidité suffisante pour maintenir la préparation liquide pendant sa manipulation.

La rigidité conférée est aussi suffisante pour pouvoir utiliser des ustensiles de préhension, par exemple des manche amovibles

Une autre solution au problème posé est un procédé de démoulage d'une préparation culinaire hors d'un moule comportant une base en un matériau souple comprenant une paroi de fond et une paroi latérale dont l'extrémité supérieure définie une ouverture, et une armature rigide. Selon cette solution, on pose le fond du moule sur un support, et on exerce, en direction du support, de façon à courber la paroi latérale, une pression sur l'armature préalablement fixée sur toute la périphérie, à une distance prédéterminée et au niveau de l'ouverture.

D'autres particularités et avantages de l'invention apparaîtront dans la description ci-dessous d'un mode de réalisation donné à titre d'exemple non limitatif.

Aux dessins annexés:
- la figure 1 représente une vue en perspective d'un moule selon l'invention ;
- la figure 2 représente un moule vu de haut ;
- la figure 3 représente une vue en coupe selon l'axe III-III d'un moule ;
- la figure 4 représente, vue de haut, une armature rigide utilisée dans un moule selon la présente invention ;
- la figure 5 représente une vue en coupe selon l'axe V-V d'une armature rigide ; et
- la figure 6 représente une vue en coupe agrandie de la zone VI de la figure 3.

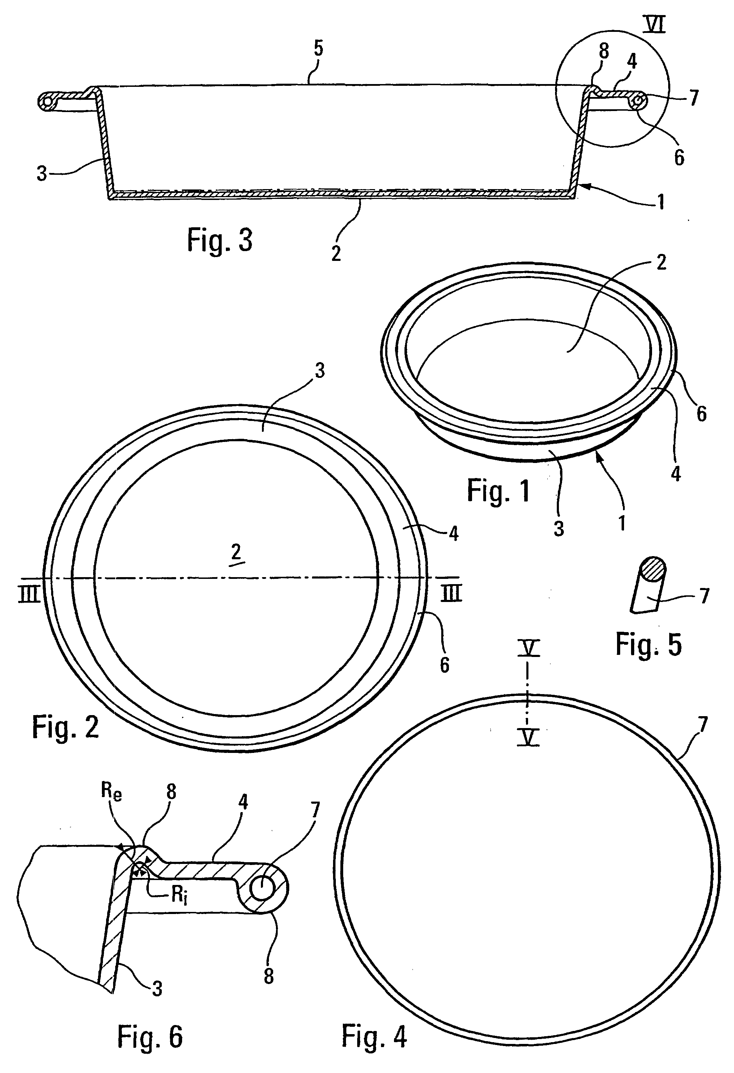

Tel qu'on peut le voir aux figures 1 et 3, le moule selon la présente invention comporte une base 1 en un matériau souple, par exemple en silicone. Cette base 1 forme le récipient à l'intérieur duquel la préparation culinaire peut être disposée. Cette base comporte un paroi de fond 2, une paroi latérale 3 et une couronne supérieure 4 servant de rebord qui s'étend radialement à partir de la partie supérieure de la paroi latérale 3.

Pour un diamètre de l'ouverture 5 de l'ordre de 240mm, l'épaisseur de la couronne 4 est en général comprise entre 0,5% et 1,5% de ce diamètre, de préférence 1%. Dans un mode de réalisation préférentiel, l'épaisseur de la couronne 4 est du même ordre de grandeur que les parois de fond 2 et latérale 3, et de préférence, est comprise entre 2 et 4mm.

L'extrémité supérieure de la paroi latérale 3 délimite une ouverture 5 par laquelle la préparation peut être introduite dans la base 1. L'extrémité annulaire 6 de la couronne supérieure 4 située au niveau de l'ouverture 5 comporte une armature rigide 7.

L'armature rigide 7 peut être, par exemple, en matière plastique thermodurcie ou en métal tel qu'en acier inoxydable ou en aluminium. L'armature 7 peut être, par exemple, un fil en acier inoxydable d'un diamètre compris entre 1 et 5mm.

L'armature 7, disposée sur toute la périphérie du moule, est située au niveau de l'ouverture 5. Elle est reliée à la paroi latérale 3 de la base 1 uniquement par la couronne 4 à distance prédéterminée de l'ouverture 5.

Cette distance est en général comprise entre 10 et 40mm, elle dépend des dimensions du moule et peut être facilement déterminée par l'homme du métier. Par exemple, pour un moule dont l'ouverture 5 a un diamètre de 240mm et dont la hauteur est de 50mm environ, l'armature 7 peut être disposée à une distance de l'ouverture 5 comprise entre 0,08 et 0,14 fois ce diamètre, de préférence, 0,12 fois.

Du fait que l'armature 7 est située au niveau de l'ouverture 5, qu'elle est décalée radialement de cette ouverture 5 et qu'elle n'est reliée à la base 1 uniquement par la couronne 4, le démoulage de la préparation culinaire se trouve grandement facilitée : il suffit, après avoir posé le moule sur un support, d'une simple pression exercée au niveau de l'extrémité annulaire 6 de la couronne 4. Entraînée par la couronne 4, la paroi latérale 3 se courbe, permettant un démoulage simple, sans effort et ne pouvant pas abîmer la préparation culinaire.

Selon un mode de réalisation particulier, la couronne annulaire 4 est reliée à la partie supérieure de la paroi latérale 3 par l'intermédiaire d'une zone recourbée 8 dont le rayon de courbure est dirigé sensiblement vers la paroi de fond 2 de la base 1.

Cette zone 8 permet de faciliter le démoulage, en constituant l'initiation de la courbure de la paroi latérale 3 permettant le démoulage. En effet, l'effort le plus important consistant à rompre l'angle que font la couronne 4 à la paroi latérale 3 n'est plus nécessaire (figure 6).

Le rayon de courbure interne Ri qui est le rayon de courbure pris à partir de la face de la couronne 4 se trouvant du côté de la concavité, est facilement déterminé par l'homme du métier en fonction de la rigidité de la paroi latérale 3 de la base 1. En général, le rayon de courbure interne Ri est au moins égal à l'épaisseur de la paroi, de préférence supérieur à 1,2 fois cette épaisseur, et même 1,5 fois. Pour une base 1 en silicone d'épaisseur 2mm, le rayon de courbure externe Re qui est le rayon de courbure pris à partir de la face de la couronne 4 se trouvant du côté opposé à la concavité et qui correspond au rayon de courbure interne Ri majoré de l'épaisseur de la couronne 4, peut être compris entre 5 et 10mm.

Dans l'exemple illustré par les figures 1 à 5, l'armature rigide 7 a la forme d'un anneau elliptique. Bien évidemment, elle peut prendre toute autre forme (circulaire, rectangulaire, carrée...).

Dans l'exemple illustré par les figures 1 à 5, la couronne 4 est réalisée en continuité et dans le même matériau que la base 1. Il est évident qu'il est possible d'utiliser une couronne 4 amovible.

Tel qu'on peut le voir à la figure 3, l'armature rigide 7 est noyée dans le matériau constituant la couronne 4 à l'extrémité annulaire 6 de celle-ci. Il est évident qu'elle peut être solidarisée à celle-ci de façon permanente par tout autre moyen. Elle peut aussi y être fixée de façon amovible, par exemple par encliquetage.

Bien que non représenté dans les figures, il est possible de disposer au niveau de l'armature 7 de moyens adaptés à coopérer avec des ustensiles de préhension amovibles.

## Revendications

1. Moule pour préparation culinaire comportant une base (1) en un matériau souple possédant une paroi latérale (3) dont l'extrémité supérieure définit une ouverture (5), et une armature rigide annulaire (7), **caractérisé en ce qu'**il comporte une couronne supérieure (4) s'étendant radialement vers l'extérieur de la paroi latérale (3) au niveau de l'ouverture (5) de la base (1), et **en ce que** l'armature annulaire (7) est fixée à cette couronne supérieure (4), sur toute la périphérie et à une distance prédéterminée de l'ouverture (5).

2. Moule selon la revendication 1, **caractérisé en ce que** la couronne supérieure (4) est réalisée en continuité et dans le même matériau que la base (1).

3. Moule selon la revendication 1, **caractérisé en ce que** la couronne supérieure (4) est amovible de la base (1).

4. Moule selon l'une des revendications 1 à 3, **caractérisé en ce qu'**il comprend une zone recourbée (8) qui relie la couronne (4) à la paroi latérale (3) et dont le rayon de courbure est dirigé sensiblement vers la paroi de fond (2) de la base (1).

5. Moule selon l'une des revendication 1 à 4, **caractérisé en ce que** l'armature (7) est en métal.

6. Moule selon l'une des revendications 1 à 4, **caractérisé en ce que** l'armature (7) est en matière plastique thermodurcie.

7. Moule selon l'une des revendications 1 à 6, **caractérisé en ce que** la base (1) est en silicone.

8. Moule selon l'une des revendications 1 à 7, **caractérisé en ce que** l'armature (7) est amovible.

9. Moule selon l'une des revendications 1 à 7, **caractérisé en ce que** l'armature (7) est solidarisée de façon permanente à la couronne (4).

10. Moule selon la revendication 9, **caractérisé en ce que** l'armature (7) est noyée dans le matériau constituant la couronne (4).

11. Procédé de démoulage d'une préparation culinaire hors d'un moule comportant une base (1) en un matériau souple comprenant une paroi de fond (2) et une paroi latérale (3) dont l'extrémité supérieure définie une ouverture (5), et une armature rigide (7), **caractérisé en ce que** l'on pose le fond (2) du moule sur un support, et que l'on exerce, en direction du support, de façon à courber la paroi latérale (3), une pression sur l'armature (7) préalablement fixée sur toute la périphérie, à une distance prédéterminée et au niveau de l'ouverture (5).

## Claims

1. A mould for culinary preparation comprising a base (1) of a flexible material having a side wall (3), the top end of which defines an opening (5), and an annular rigid frame (7), **characterised in that** it comprises a top ring (4) extending radially towards the outside of the side wall (3) at the level of the opening (5) of the base (1), and **in that** the annular frame (7) is fixed to said top ring (4) over the entire periphery and at a predetermined distance from the opening (5).

2. A mould according to claim 1, **characterised in that** the top ring (4) is continuous and made of the same material as the base (1).

3. A mould according to claim 1, **characterised in that** the top ring (4) is detachable from the base (1).

4. A mould according to any one of claims 1 to 3, **characterised in that** it comprises a curved zone (8) which connects the ring (4) to the side wall (3) and of which the radius of curvature is directed substantially towards the bottom wall (2) of the base (1).

5. A mould according to any one of claims 1 to 4, **characterised in that** the frame (7) is of metal.

6. A mould according to any one of claims 1 to 4, **characterised in that** the frame (7) is made of a thermosetting plastic.

7. A mould according to any one of claims 1 to 6, **characterised in that** the base (1) is made of silicone.

8. A mould according to any one of claims 1 to 7, **characterised in that** the frame (7) is detachable.

9. A mould according to any one of claims 1 to 7, **characterised in that** the frame (7) is permanently connected to the ring (4).

10. A mould according to claim 9, **characterised in that** the frame (7) is embedded in the material constituting the ring (4).

11. A method of removing a culinary preparation from a mould comprising a base (1) of a flexible material comprising a bottom wall (2) and a side wall (3) of which the top end defines an opening (5), and a rigid frame (7), **characterised in that** the bottom (2) of the mould is placed on a support and **in that** there is exerted, in the direction of the support, so as to curve the side wall (3), a pressure on the frame (7) which has previously been fixed over the entire periphery at a predetermined distance and at the level of the opening (5).

## Patentansprüche

1. Form für eine kulinarische Zubereitung mit einer Basis (1) aus einem nachgiebigen Material, welche eine Seitenwand (3), deren oberes Ende eine Öffnung (5) definiert, und eine starre ringförmige Bewehrung (7) aufweist, **dadurch gekennzeichnet, dass** sie einen sich radial zur Außenseite der Seitenwand (3) hin auf Höhe der Öffnung (5) der Basis (1) erstreckenden oberen Kranz (4) umfasst, und dass die ringförmige Bewehrung (7) an diesem oberen Kranz (4) auf seinem ganzen Umfang und mit einem vorbestimmten Abstand von der Öffnung (5) befestigt ist.

2. Form nach Anspruch 1, **dadurch gekennzeichnet, dass** der obere Kranz (4) kontinuierlich und in dem gleichen Material wie die Basis (1) realisiert ist.

3. Form nach Anspruch 1, **dadurch gekennzeichnet, dass** der obere Kranz (4) von der Basis (1) lösbar ist.

4. Form nach einem der Ansprüche 1 bis 3, **dadurch gekennzeichnet, dass** sie eine gekrümmte Zone (8) umfasst, die den Kranz (4) mit der Seitenwand (3) verbindet und deren Krümmungsradius im Wesentlichen zur Wand des Bodens (2) der Basis (1) gerichtet ist.

5. Form nach einem der Ansprüche 1 bis 4, **dadurch gekennzeichnet, dass** die Bewehrung (7) aus Metall besteht.

6. Form nach einem der Ansprüche 1 bis 4, **dadurch gekennzeichnet, dass** die Bewehrung (7) aus einem warmausgehärteten Kunststoff besteht.

7. Form nach einem der Ansprüche 1 bis 6, **dadurch gekennzeichnet, dass** die Basis (1) aus Silikon besteht.

8. Form nach einem der Ansprüche 1 bis 7, **dadurch gekennzeichnet, dass** die Bewehrung (7) abnehmbar ist.

9. Form nach einem der Ansprüche 1 bis 7, **dadurch gekennzeichnet, dass** die Bewehrung (7) dauerhaft an dem Kranz (4) befestigt ist.

10. Form nach Anspruch 9, **dadurch gekennzeichnet, dass** die Bewehrung (7) in dem den Kranz (4) bildenden Material versenkt ist.

11. Verfahren zum Ausformen einer kulinarischen Zubereitung aus einer Form mit einer Basis (1) aus einem nachgiebigen Material mit einer Bodenwand (2) und einer Seitenwand (3), deren oberes Ende eine Öffnung (5) definiert, und einer starren Bewehrung (7), **dadurch gekennzeichnet, dass** man den Boden (2) der Form auf einen Träger stellt, und dass man in Richtung des Trägers zum Krümmen der Seitenwand (3) einen Druck auf die zuvor auf dem gesamten Umfang mit einem vorbestimmten Abstand und auf Höhe der Öffnung (5) befestigte Bewehrung ausübt.
